# EUROPÄISCHE PATENTSCHRIFT

(11) **EP 0 417 742 B1**
(45) Veröffentlichungstag und Bekanntmachung des Hinweises auf die Patenterteilung: **18.11.1993**
(21) Anmeldenummer: 90117514.1
(22) Anmeldetag: 11.09.1990
(51) Int. Cl.: G01B 11/00, G01D 5/34

(54) **Elektrooptische Abtasteinheit für ein Längen- oder Winkelmessgerät**
Electro-optical scanning device for a length or angle measuring instrument
Dispositif de balayage électro-optique pour un appareil de mesure de longueur ou d'angle

(30) Priorität: 11.09.1989 DE 3930303
(43) Veröffentlichungstag der Anmeldung: 20.03.1991
(73) Patentinhaber: LITTON PRECISION PRODUCTS INTERNATIONAL GMBH, D-85774 Unterföhring (DE)
(72) Erfinder: Geroldinger, Arnold, A-4780 Schärding (AT)
(74) Vertreter: Müller, Frithjof E., Dipl.-Ing.

(56) Entgegenhaltungen:
- EP-A- 0 184 578
- CH-A- 506 851
- CH-A- 645 716
- GB-A- 1 223 141

## Beschreibung

Die Erfindung betrifft eine elektrooptische Abtasteinheit für ein Längen- oder Winkelmeßgerät, bei der das von einer Lichtquelle ausgehende Licht eine mit lichtdurchlässiger Teilung versehene Abtastplatte durchquert, durch eine relativ zur Abtastplatte bewegliche, lichtdurchlässige Skala moduliert wird und auf wenigstens ein photoelektrisches Empfängerelement auftrifft.

Elektrooptische Abtasteinheiten der genannten Art finden insbesondere in Drehgebern Anwendung, bei denen die bewegliche Skala durch eine mit der Geberwelle verbundene Teilscheibe gebildet ist.

Die elektrooptische Abtasteinheit beispielsweise für derartige Drehgeber, enthält üblicherweise eine Lichtquelle, beispielsweise eine oder gegebenenfalls mehrere lichtemittierende Dioden. Das Licht der Lichtquelle wird üblicherweise zunächst über eine Kondensorlinse parallelisiert und durchquert dann eine Abtastplatte sowie eine in Strahlrichtung dahinter angeordnete, relativ zur Abtastplatte bewegliche Skala, insbesondere auf einer mit der Geberwelle verbundenen Teilscheibe, um dann, durch die Skala der Teilscheibe moduliert, auf mindestens ein photoelektrisches Empfängerelement, z. B. Photodioden, aufzutreffen. Wird die Skala, also beispielsweise die Teilscheibe, bei Drehung der Geberwelle bewegt, so liefern die Empfängerelemente im Prinzip sinusförmige oder sinusähnliche Ausgangssignale.

Die Abtastplatte weist mindestens zwei sogenannte Fenster mit gleicher Gitterteilung wie die Skalenteilung auf der Teilscheibe auf. Diese Fenster sind zueinander z. B. um ein Viertel einer Periode verschoben, wobei eine Periode einen Skalenstrich plus Lücke entspricht. Auf diese Weise lassen sich zwei gegeneinander phasenverschobene Signalzüge gewinnen, um etwa bei einem inkrementalen Drehgeber eine Unterscheidung zwischen Vorwärts- und Rückwärtsdrehung treffen zu können.

Es ist nun wichtig, daß die durch die Empfängerelemente (Photodioden) gelieferten sinusförmigen Signale mit möglichst gleichen Triggerschwellen und gleich hohen Amplituden auftreten, damit durch nachfolgende, außerhalb oder innerhalb des Drehgebers vorhandene Interpolationselektroniken eine Signalunterteilung und -bewertung ohne Beeinträchtigung des Meßergebnisses möglich ist.

Zur Ein- und Nachstellung der Triggerschwellen bzw. der Amplituden sind elektrische Maßnahmen, aber beispielsweise auch aus der GB-A-1223141 eine mechanische Schraubentrimmung bekannt, die den von der Lichtquelle ausgehenden Lichtstrom vor der Abtastplatte und nach der Kondensorlinse zu beeinflussen gestattet. Diese Art mechanischer Lichttrimmung hat gegenüber elektronischen Korrektur- und Einstellmaßnahmen den bekannten Vorteil, daß Umgebungstemperaturschwankungen keine Änderungen auf die anstehenden Signale bewirken.

Die bekannte mechanische Lichttrimmung ist jedoch insofern unbefriedigend, als der von der Lichtquelle ausgehende Lichtstrom insgesamt verändert wird, also empfängerseitig bei einem Trimmvorgang die Lichtmenge für mehrere Empfängerelemente gleichzeitig beeinflußt wird. Dies bringt insbesondere für niedrigimpulsige Drehgeber den Nachteil, daß für jede verwendete niedrige Impulszahl eine separat einzujustierende Leiterplatte vorhanden sein muß. Dies bedeutet nicht nur eine aufwendigere Lagerhaltung für eine Vielzahl von Leiterplatten, sondern auch einen erhöhten Aufwand bei der Justage des Drehgebers.

Der Erfindung liegt die Aufgabe zugrunde, elektrooptische Abtasteinheiten für die genannten Zwecke so zu verbessern, daß eine Dosierung der empfängerseitig auftreffenden Lichtmenge möglich ist, ohne daß bei mehreren, hinsichtlich ihrer Ausgangssignale aufeinander abzustimmenden Empfängerelementen eine Mehrzahl von separaten Halterungs- oder Leiterplatten mit jeweiliger Einzelnachstellung erforderlich ist.

Die Erfindung ist bei einer elektrooptischen Abtasteinheit für ein Längen- oder Winkelmeßgerät, bei der das von einer Lichtquelle ausgehende Licht eine mit lichtdurchlässiger Teilung versehene Abtastplatte durchquert, durch eine relativ zur Abtastplatte bewegliche, lichtdurchlässige Skala moduliert wird und auf wenigstens ein photoelektrisches Empfängerelement auftrifft, dadurch gekennzeichnet, daß das einzelne Empfängerelement senkrecht zum auftreffenden modulierten Lichtstrahl mit Feinjustierung nachstellbar ist.

Vorzugsweise sind die mehreren Empfängerelemente jeweils in einem separaten Schlitten gehalten, der in einer Schlitzführung einer mechanischen Verstelleinheit durch Schraubspindeln nachstellbar ist. Die gesamte mechanische Verstelleinheit für alle Empfängerelemente wird durch eine Grundplatte gebildet, die mit Schlitzen zur Aufnahme der die Empfängerelemente tragenden Schlitten versehen ist. Auf den den Empfängerelementen abgewandten Enden sind die Schlitten mit Schraubgewinden versehen, in die jeweils eine in der Grundplatte gelagerte Verstellspindel eingreift, die von einer Schmalseite der Grundplatte aus verstellbar ist. Die Grundplatte wird vorzugsweise unmittelbar auf der die elektronischen Baugruppen für die Signalauswertung tragenden Leiterplatte fixiert.

Mit der Erfindung ist, obwohl nur eine einheitliche Grundplatte benötigt wird, eine individuelle Feinjustierung jedes einzelnen Empfängerelements auf die optimale Position hinsichtlich der optischen Achse möglich. Durch das Verschieben der einzelnen Empfängerelemente relativ zur optischen Achse kann damit die beleuchtete Fläche der einzelnen Empfänger variiert und damit jede gewünschte Lichtmenge exakt dosiert werden.

Gegenüber der bekannten Schraubtrimmung, die den Lichtstrom zwischen Kondensorlinse und Abtastplatte variiert, ergibt sich der wesentliche weitere Vorteil, daß insbesondere für niedrigimpulsige Drehgeber die Empfänger in einem beliebig wählbaren Verstellbereich immer in die optische Achse gebracht werden können. Dies ist von besonderem Vorteil, da bei niedrigen Impulszahlen die Phasenverschiebungen der einzelnen Fenster auf der Abtastplatte zueinander in ihren maßlichen Abmessungen oft schon größer sind als die jeweiligen Längen der empfindlichen Flächen der Empfänger. Mit anderen Worten, bei der mechanischen Lichttrimmung gemäß dem Stand der Technik kann es vorkommen, daß einzelne Empfängerelemente lichtlos bleiben. Aus diesem Grund war es erforderlich, für jede verwendete Niedrigimpulszahl eine separate Leiterplatte vorzusehen.

Bei der erfindungsgemäßen Verstelleinheit dagegen kann das komplette Spektrum verschiedenster Impulszahlen voll abgedeckt werden und es ist nur eine Standardleiterplatte und eine Verstelleinrichtung erforderlich.

Ein Ausführungsbeispiel der Erfindung wird nachfolgend unter Bezug auf die Zeichnung näher beschrieben. Es zeigen:
- Fig. 1: eine elektrooptische Abtasteinheit mit erfindungsgemäßen Merkmalen, eingebaut in einen nur schematisch dargestellten Drehgeber, und
- Fig. 2: eine Empfängerverstelleinheit mit erfindungsgemäßen Merkmalen.

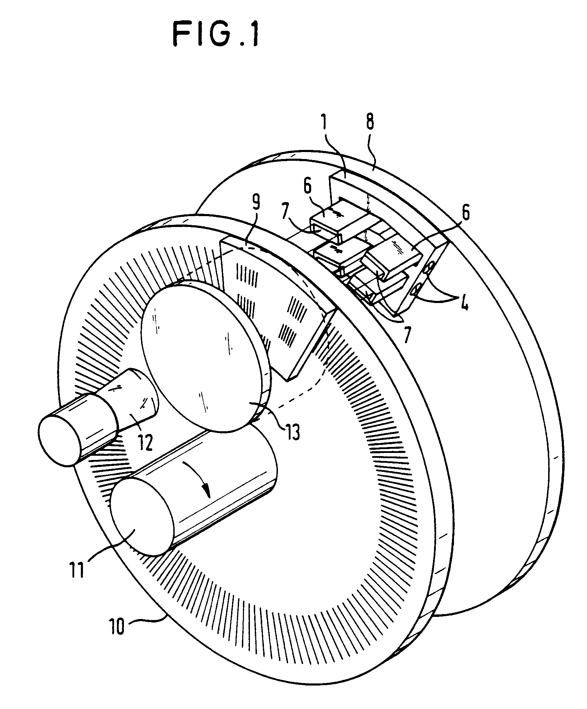

Der in Fig. 1 nur schematisch dargestellte Drehgeber umfaßt eine Geberwelle 11, die mit einer Teilscheibe mit Strichskala verbunden ist. Eine gehäusefeste Lichtquelle 12, z.B. eine Glühlampe oder eine lichtemittierende Diode, bestrahlt über eine den Lichtstrom parallelisierende Kondensorlinse 13 eine Abtastplatte 9, die in bekannter Weise mindestens zwei, im dargestellten Beispiel drei, Fenster mit gleicher Gitterteilung wie auf der Teilscheibe aufweist. Für den Fachmann bedarf die Anordnung der einzelnen Gitterteilungen auf der Abtastplatte 9 sowie deren jeweilige Zuordnung zur Skala oder den Skalen auf der Teilscheibe 10 keiner weiteren Erläuterung. Der die mit Gitterteilung versehenen Fenster auf der Abtastplatte 9 durchsetzende Lichtstrom wird bei Rotation der Teilscheibe 10 moduliert und trifft auf eine der Anzahl der Fenster in der Abtastplatte entsprechende Mehrzahl von Empfängerelementen 7, z. B. Photodioden, auf, die in bekannter Weise ein im Prinzip sinusförmiges Ausgangssignal an eine hier nicht dargestellte und auch im Zusammenhang der Erfindung nicht weiter interessierende Auswerteelektronik liefern.

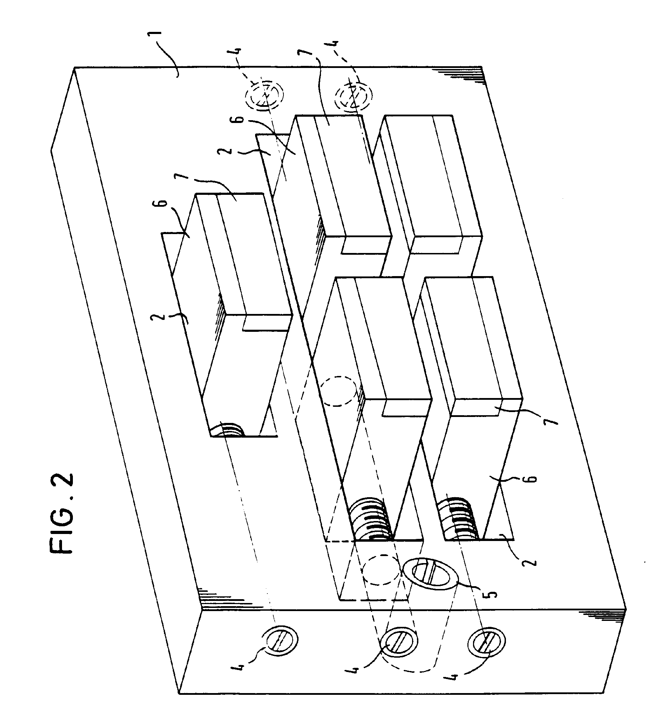

Die Empfängerelemente 7 sind in klötzchenartigen Schlitten 6 gehalten. Die Schlitten 6 durchsetzen Schlitzführungen 2 (vgl. Fig. 2) in einer Grundplatte 1. Auf der den Photodioden 7 abgewandten Seite sind die Schlitten 6 mit Gewinden versehen, welche jeweils von einer Schraube oder Gewindespindel 4 durchsetzt sind. Die Gewindespindeln 4 können beispielshalber Schaftschrauben nach DIN 427 sein. Die Gewindespindeln 4 durchsetzen die Grundplatte 1 im Bereich der Schlitzführungen 2 und lassen sich von einer oder mehreren Schmalseiten der Grundplatte 1 aus, beispielsweise mittels Schraubenzieher, verstellen. Sicherungsstifte 5 ergänzen die Spindelverstelleinrichtung für die Schlitten 6.

Die Grundplatte 1 wird, wie aus Fig. 1 ersichtlich, in der optischen Achse zur Lichtquelle 12 auf einer Leiterplatte 8 so befestigt, vorzugsweise verschraubt, daß die auf der Frontseite der klötzchenartigen Schlitten 6 angeordneten Empfänger 7 in Richtung der Lichtquelle 12 zu stehen kommen. Durch Drehen der Gewindespindeln 4 können die Schlitten 6 innerhalb der vorgegebenen Grenzen in jede beliebige Stellung gebracht werden. Die Grundplatte 1 kann so ausgeführt sein, daß die Schlitzführungen 2 vorzugsweise bei gerader Skale in mehr oder weniger beliebiger Länge oder in Anpassung auf den Durchmesser der Teilscheibe 10 auch, wie aus Fig. 1 ersichtlich, in einem Winkel zueinander verlaufen. Dadurch ist es möglich, die jeweils größte Lichtmenge auf die empfindlichen Flächen der Empfängerelemente 7 zu bringen und optimal zur Signalauswertung zu nutzen.

## Patentansprüche

1. Elektrooptische Abtasteinheit für ein Längen- oder Winkelmeßgerät, bei der das von einer Lichtquelle (12) ausgehende Licht eine mit lichtdurchlässiger Teilung versehene Abtastplatte (9) durchquert, durch eine relativ zur Abtastplatte (9) bewegliche, lichtdurchlässige Skala moduliert wird und auf wenigstens ein photoelektrisches Empfängerelement (7) auftrifft, **dadurch gekennzeichnet**, daß das einzelne Empfängerelement (7) senkrecht zum auftreffenden modulierten Lichtstrahl mit Feinjustierung nachstellbar ist.

2. Elektrooptische Abtasteinheit nach Anspruch 1, **dadurch** **gekennzeichnet,** daß das einzelne Empfängerelement (7) in einem diesem zugeordneten Schlitten (6) gehalten ist, der in einer Schlitzführung (2) einer Verstelleinheit durch eine Schraubspindel (4) nachstellbar ist.

3. Elektrooptische Abtasteinheit nach Anspruch 2 für einen Drehgeber, bei dem die bewegliche Skala durch eine mit der Drehgeberwelle (11) verbundene Teilscheibe (10) gebildet ist, **dadurch gekennzeichnet**, daß der das einzelne Empfängerelement (7) enthaltende Schlitten (6) durch ein klotzförmiges, auf der der Empfängerfläche abgekehrten Seite mit einem Gewinde versehenes Element gebildet ist, welches die in einer Verstellplatte (1) vorhandene Schlitzführung durchsetzt und über eine in der Verstellplatte (1) gelagerte Schraubspindel (4) gehalten und nachstellbar ist.

4. Elektrooptische Abtasteinheit nach Anspruch 3, **dadurch** **gekennzeichnet,** daß die Verstellplatte (1) unmittelbar auf einer im Gehäuse des Drehgebers festgelegten Platine oder Leiterplatte (8) fixiert ist.

5. Elektrooptische Abtasteinheit nach Anspruch 3, **dadurch gekennzeichnet,** daß die Schraubspindel (4) die Verstellplatte (1) parallel zu einer von deren Hauptflächen durchsetzt und von einer Schmalseite der Verstellplatte (1) aus verdrehbar ist.

6. Elektrooptische Abtasteinheit nach einem der vorstehenden Ansprüche, **dadurch gekennzeichnet**, daß mehrere Empfänger/Schlitteneinheiten (6, 7) in einer oder mehreren Schlitzführungen (2) der Verstelleinheit geführt und paarweise oder einzeln nachstellbar sind.

## Claims

1. Electrooptical scanning unit for a length-measuring or angle-measuring system, in which unit the light proceeding from a light source (12) passes through a scanning plate (9) provided with light-transmitting graduation, is modulated by a light-transmitting scale which is movable relative to the scanning plate (9), and impinges upon at least one photoelectric receiver element (7), characterized in that the individual receiver element (7) is resettable perpendicular to the impinging modulated light beam with fine adjustment.

2. Electrooptical scanning unit according to Claim 1, characterized in that the individual receiver element (7) is held in a carriage (6), which is associated with the latter and which is resettable in a slot guide (2) of a displacement unit by a screw spindle (4).

3. Electrooptical scanning unit according to Claim 2 for a roation pick-up, in which the movable scale is formed by a graduated disc (10), which is connected to the rotation pick-up shaft (11), characterized in that the carriage (6) including the individual receiver element (7) is formed by a small block-like element, which is provided, on that side which is remote from the receiver surface, with a thread and which penetrates the slot guide present in a displacement plate (1) and is held and resettable by means of a screw spindle (4) mounted in the displacement plate (1).

4. Electrooptical scanning unit according to Claim 3, characterized in that the displacement plate (1) is fixed directly on a bar or printed circuit board (8) which is retained in the housing of the rotation pick-up.

5. Electrooptical scanning unit according to Claim 3, characterized in that the screw spindle (4) penetrates the displacement plate (1) parallel to one of its main surfaces and is rotatable from a narrow side of the displacement plate (1).

6. Electrooptical scanning unit according to one of the preceding claims, characterized in that a plurality of receiver/carriage units (6, 7) are guided in one or more slot guides (2) of the displacement unit and are resettable pairwise or individually.

## Revendications

1. Dispositif de balayage électro-optique pour un appareil de mesure de longueur ou d'angle, dans lequel la lumière en provenance d'une source lumineuse (12) traverse une plaque de balayage (9) pourvue d'une graduation translucide, est modulée par une graduation translucide mobile par rapport à la plaque de balayage (9), et arrive sur au moins un élément récepteur photo-électrique (7), **caractérisé** en ce que chaque élément récepteur (7) peut être ajusté, par un ajustement de précision, perpendiculairement au rayon lumineux modulé incident.

2. Dispositif de balayage électro-optique selon la revendication 1, **caractérisé** en ce que chaque élément récepteur (7) est fixé dans un coulisseau (6), qui lui est associé et peut être ajusté, au moyen d'une broche filetée (4), dans une fente de guidage (2) d'une unité de réglage.

3. Dispositif de balayage électro-optique selon la revendication 2 pour un résolveur, dans lequel la graduation mobile est formée par un disque gradué (10) monté sur l'arbre (11) du résolveur, **caractérisé** en ce que le coulisseau (6) contenant chaque élément récepteur (7) est formé par un élément en forme de bloc, qui est pourvu d'un filetage sur son côté opposé à la face réceptrice, traverse la fente de guidage présente dans une plaque de réglage (1) et est maintenu avec possibilité d'ajustement au moyen d'une broche filetée (4) montée dans la plaque de réglage (1).

4. Dispositif de balayage électro-optique selon la revendication 3, **caractérisé** en ce que la plaque de réglage (1) est directement fixée sur une platine ou plaquette imprimée (8), installée dans le boîtier du résolveur.

5. Dispositif de balayage électro-optique selon la revendication 3, **caractérisé** en ce que la broche filetée (4) traverse la plaque de réglage (1) parallèlement à une de ses faces principales, et on peut la faire tourner à partir d'un côté étroit de la plaque de réglage (1).

6. Dispositif de balayage électro-optique selon l'une des revendications précédentes, **caractérisé** en ce que plusieurs unités récepteur/coulisseau (6, 7) sont guidées dans une ou plusieurs fentes de guidage (2) de l'unité de réglage, et ajustables individuellement ou par paires.
